Europäisches Patentamt

(19) European Patent Office

Office européen des brevets

(11) Publication number: **0 227 916 B1**

# EUROPEAN PATENT SPECIFICATION

(45) Date of publication of patent specification: **28.08.91**  (51) Int. Cl.⁵: **G05D 23/13**

(21) Application number: **86115209.8**

(22) Date of filing: **03.11.86**

(54) Electronic water mixing device.

(30) Priority: **06.12.85 IT 6802785**

(43) Date of publication of application:
**08.07.87 Bulletin 87/28**

(45) Publication of the grant of the patent:
**28.08.91 Bulletin 91/35**

(84) Designated Contracting States:
**BE CH DE ES FR GB LI NL SE**

(56) References cited:
**DE-A- 3 430 176**
**FR-A- 2 495 351**
**US-A- 4 420 811**

(73) Proprietor: **Stella, Giulio**
**Via Cerruti, 8**
**I-29100 Novara(IT)**

(72) Inventor: **Stella, Giulio**
**Via Cerruti, 8**
**I-29100 Novara(IT)**

(74) Representative: **Prato, Roberto et al**
**STUDIO TORTA Società Semplice Via Viotti 9**
**I-10121 Torino(IT)**

## Description

This invention relates to a water mixing device, with a single flow regulator member provided with two inlets and one outlet which are respectively connected, when in use, to hot water and cold water feed means and to a pipe for feeding a plurality of mixed water delivery units.

Numerous water mixing devices for domestic use incorporating temperature control of the mixed water are known, this control in some cases being electronic. Such mixing devices can either be incorporated into each water delivery unit or can be installed separately but in proximity to each delivery unit, or alternately can be installed in a central position in the bathroom.

In this latter case, for example when the user is in the bath tub or under the shower, considerable disconfort is involved in manually operating the temperature adjustment member of the said device in order to change the temperature of the mixed water feeding each delivery unit of the bathroom. This disconfort is even greater if the mixed water distribution system comprises a further delivery unit in another room such as the kitchen. In such cases it is apparent that each time the temperature of the mixed water is to be changed, this has to be done in the room in which the said adjustment member of the mixing device is located.

It is known from the US-A-4 420 811 an electronic device for selecting, displaying and controlling the water flow temperature at the outlet of the individual bathroom delivery unit, which includes a microprocessor, a temperature sensor, temperature set up keys and an alphanumeric display for the actual temperature of the water supplied to the individual delivery unit, the tub and the shower having a common device provided with a switching command. This device does not provide for an alarm device in the case the temperature of the mixed water exceeds the set up temperature at least in the shower.

It is also known form the DE-A-3 430 176 a device for mixing the hot and cold water under the control of a microprocessor and a temperature sensor. In this device the microprocessor is adapted to close the outlet magnetic valve of the water as long as the sensed temperature is higher than the temperature set up by the user.

Finally, it is known from the FR-A-2 495 351 an apparatus for mixing hot and cold water and supplying same to a set of delivery units of the bathroom. The mixture is controlled by a set of electronic cards associated to the various delivery units, whereby the user cannot either set up the desired temperature or check the temperature of the mixture. No alarm is provided in the case of supplying too hot water.

The object of the present invention is to provide a water mixing device which obviates the aforesaid drawbacks of devices of known type.

The said object is achieved by the water mixing device according to the invention, which is characterized by comprising: measuring means to measure the temperature of the mixed water arranged immediately downstream of said outlet of said single flow regulator member; a plurality of panels, each of which comprises selecting means to select the mixed water temperature, first display means to display the temperature selected by said selecting means, and second display means to display the temperature measured by said measuring means; each of said panels being arranged for mounting in correspondence with a respective said delivery unit; central processing means connected to said measuring means and to each of said panels; actuator means of said single flow regulator member which are controlled by said central processing means in such a manner that when in use the measured mixed water temperature is brought in proximity to the selected temperature; and warning alarm means for installation in at least one predetermined delivery unit which are automatically enabled by said central processing means when the measured mixed water temperature exceeds a predetermined value.

The present invention will be more apparent from the description of a preferred embodiment thereof given hereinafter by way of non-limiting example with reference to the accompanying drawings, in which:

Figure 1 is a block diagram according to the present invention illustrated in one applicational example; and

Figure 2 is an operational diagram of a microcomputer contained in the device of Figure 1.

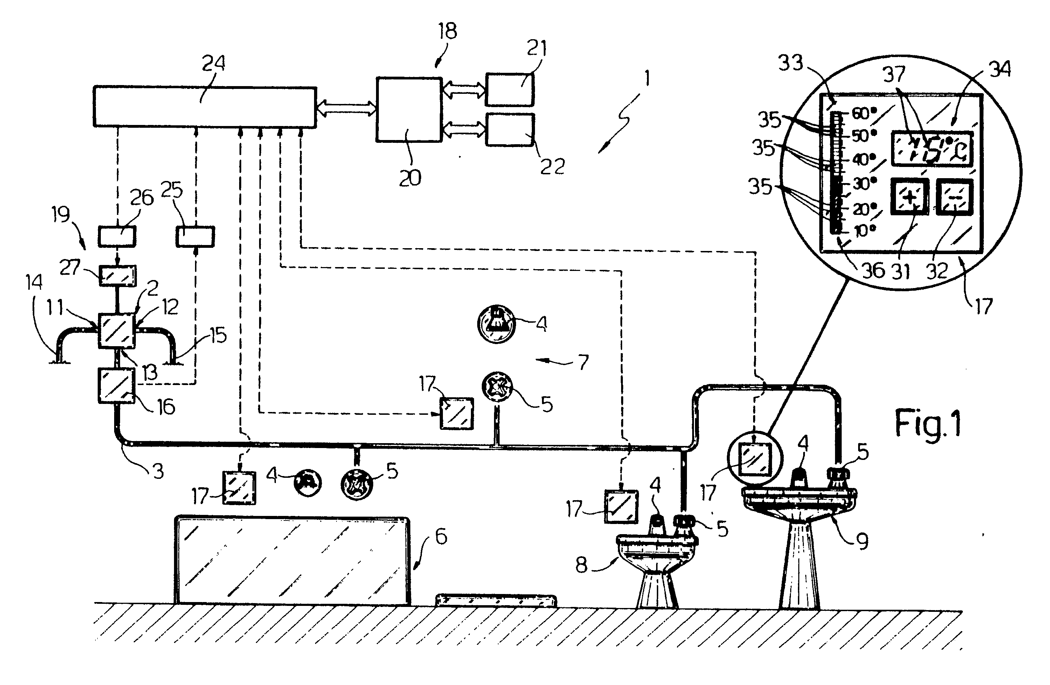

In the Figure 1, the reference numeral 1 indicates overall a water mixing device, particularly for domestic use which, when in use, feeds by way of a mixing member 2 mixed water to a distribution pipe 3 connected to a plurality of delivery units 4, each of which is valved by a respective tap 5. In the example illustrated in Figure 1, the delivery units 4 serve a bath tub 6, a shower 7, a bidet 8 and a wash basin 9 respectively.

The mixing member 2 is provided with two inlets 11, 12 and one outlet 13, which are connected respectively to a hot water feed pipe 14, a cold water feed pipe 15 and said distribution pipe 3.

According to the present invention, in addition to the flow regulator member 2, the device 1 comprises a thermoelectric transducer 16 located in the pipe 3 immediately downstream of the member 2, a plurality of selection and display panels 17, each installed in correspondence with the respective delivery unit 4, central processing means 18 and actuator means 19 for the mixing member 2.

More particularly, the processing means 18 consist essentially of a microcomputer comprising essentially a processing unit in the form of a microprocessor 20 which exchanges signals with a random access memory (RAM) 21 and a read-only memory (ROM) 22. The processing unit 20 is also able to exchange signals respectively with the transducer 16, the panels 17 and the actuator means 19, by way of an input/output unit 24. In particular, the thermoelectric transducer 16 feeds signals dependent on the mixed water temperature to the unit 24 by way of an analog/digital converter 25. One outlet of the unit 24 controls the mixing member 2 by way of said actuator means 19, which conveniently consist of a control circuit 26 for a motor 27, conveniently of the stepping type.

The unit 24 is also able to exchange electrical signals with all the panels 17, each of which consists essentially of a pair of pushbuttons 31, 32 with a "+" sign and a "-" sign respectively, and two display units 33, 34. In particular, the display unit 33 consists essentially of a column of light emitting elements 35 to the side of which there is a scale 36 showing temperature values from 10° to 60°. The display unit 34 consists of a pair of display elements 37 of the seven segment type, to the side of which there is the sign "°C". Conveniently, the display unit 33 is used to indicate the mixed water temperature set by the user on the pushbuttons 31 and 32, and shows this temperature by progressive illumination of the light emitting elements 35. The display unit 34 is sued for indicating the actual mixed water temperature measured by the thermoelectric transducer 16.

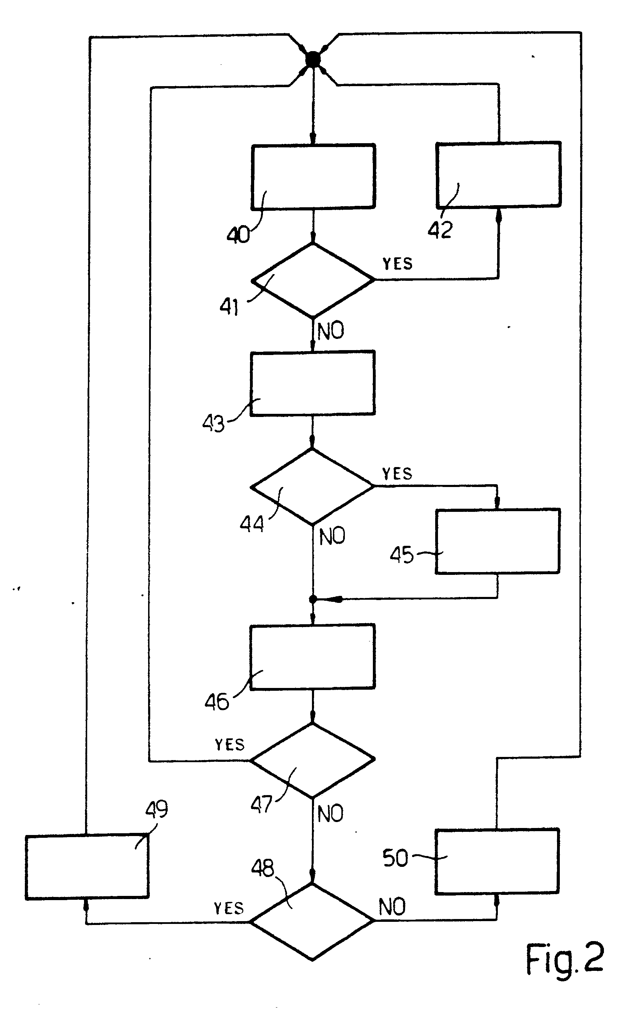

With reference to figure 2, a detailed description is given hereinafter of a possible operating cycle of the device 1 with regard to selecting the mixed water temperature and arranging the delivery of water at this temperature under the control of the device 1.

A block 40 reads and memorises the last temperature selected by the pushbuttons 31 and 32. From here, a block 41 decides whether one of the two pushbuttons 31 or 32 has been pressed or not. If it has, then a signal passes to a further block 42 which enables the panel 17 on which the said pushbutton 31 or 32 has been pressed and temporarily disenables, for a predetermined time such as ten seconds, the other panels 17 with regard to temperature selection by the respective pushbuttons 31, 32. The output of the block 42 is fed to the input of the block 40 in order to read and memorise the last selected temperature, and this continues during the time the user continues to push one of the said pushbuttons 31 or 32.

If the user is not selecting temperature by means of the pushbuttons 31, 32, the output of the block 41 passes to the block 43, which reads and memorises the mixed water temperature measured by the transducer 16. A block 44 is next reached, which calculates whether the mixed water temperature is greater than a given maximum value. If it decides positively, then the output is fed to a block 45 which generates an alarm signal, for example of optical type, which could be installed at one of the particularly critical delivery points 4, for example the one in the shower 7. If the mixed water temperature is less than said maximum value, the output is fed to a block 46 which also receives the output of said block 45. The block 46 calculates the difference between the memorised temperatures, namely the selected temperature (memorised in block 40) and the mixed water temperature (memorised in block 43). A further block 47 is next reached and determines whether the difference calculated in the block 46 is equal to zero or not. If it is, no particular action is required in which case the output of the block 47 is fed to the input of the initial block 40. If it is not, then there is an obvious unbalance between the selected temperature and the mixed water temperature. The output is therefore fed to a block 48, which calculates whether the difference between the water temperature selected by the user and the temperature of the mixed water flowing through the distribution pipe 3 is greater than zero. If it is, then a block 49 is reached which emits a control signal to be transmitted to the motor 27 in order to adjust the mixer member 2 and withdraw a greater quantity of hot water from the pipe 14. If it is not, then a block 50 is reached which feeds a control signal to the motor 27 to cause the mixing member 2 to withdraw further cold water from the pipe 15, at the same time reducing the hot water from the pipe 14. The outputs of the blocks 49 and 50 are finally fed to the input of the block 40 to check whether the adjustment of the mixed water temperature has been correctly carried out, and whether in the meantime a further selection has been made. The aforesaid cycle would then be repeated.

The advantages of the device according to the present invention are apparent from an examination of its characteristics.

Firstly, the presence of temperature control and indicating panels at each water delivery unit enables the aforesaid drawbacks of current mixing devices to be brilliantly overcome.

It is also apparent that as the device 1 can be totally operated with low voltage electrical feed, there is no danger to the user even if he operates the panels 17 with wet hands. The presence of a warning alarm element (in this case a blinking lamp) at particular delivery units (such as the shower) is also particularly useful in preventing a distracted user from being struck by an excessively hot water jet.

A single mixing device can be provided for all the bathroom delivery units and can be installed either in a different room or in a hidden position, as the temperature adjustment members are separate from the mixing device and can therefore be installed in the most comfortable inner and position in proximity to each delivery unit. As none of the temperature adjustment members form part of or depend on the shape or dimensions of the taps mounted on each bathroom appliance, the mixing device according to the present invention can be used for feeding water of controlled temperature to taps of any manufacture and to taps of conventional type already installed and operating in a bathroom.

In the case of the panel 17 disposed at the shower 7, a maximum limit could be set to the temperature selectable by this panel, or an acoustic alarm could be installed instead of or in addition to the said optical alarm, or again a thermostatic valve could be installed in series with the delivery unit 4 (for example the shower branch) to prevent the possibility of water of excessively high temperature being delivered. Instead of carrying the said " + " and "-" signs, the pushbuttons 31 and 32 could carry letters or writing, or be of different colours, for example red and blue. These pushbuttons could also be replaced by a single rotary knob which would then represent a single element for selecting the mixed water temperature.

**Claims**

1. A water mixing device (1), with a single flow regulator member (2) provided with two inlets (11, 12) and one outlet (13) which are respectively connected, when in use, to hot water (14) and cold water feed means (15) and to a pipe (3) for feeding a plurality of mixed water delivery units (4), characterized by comprising: measuring means (16) to measure the temperature of the mixed water arranged immediately downstream of said outlet (13) of said single flow regulator member (2); a plurality of panels (17), each of which comprises selecting means (31, 32) to select the mixed water temperature, first display means (33) to display the temperature selected by said selecting means (31, 32), and second display means (34) to display the temperature measured by said measuring means (16); each of said panels (17) being arranged for mounting in correspondence with a respective said delivery unit (4); central processing means (18) connected to said measuring means (16) and to each of said panels (17); actuator means (19) of said single flow regulator member (2) which are controlled by said central processing means (18) in such a manner that when in use the measured mixed water temperature is brought in proximity to the selected temperature; and warning alarm means for installation in at least one predetermined delivery unit (4) which are automatically enabled by said central processing means (18) when the measured mixed water temperature exceeds a predetermined value.

2. A device as claimed in Claim 1, characterised in that said measuring means (16) comprises a thermoelectric transducer.

3. A device as claimed in Claim 1 or 2, characterised in that said selecting means (31, 32) comprise switch means.

4. A device as claimed in Claim 3, characterised in that said switch means consist essentially of a first pushbutton (31) and a second pushbutton (32).

5. A device as claimed in Claim 4, characterised in that signs ( +, -) are reproduced on said first and second push-buttons (31, 32) respectively.

6. A device as claimed in any one of the preceding claims, characterised in that said first and second display means (33,34) comprise a plurality of light emitting elements (35) arranged in alignment with each other, and/or of a plurality of indicator elements (37) of the liquid crystal type.

7. A device as claimed in any one of the preceding claims, characterised in that said warning alarm means are of optical and/or acoustic type.

8. A device as claimed in any one of the preceding claims, characterised in that said central processing means (18) comprise a microprocessor (20) incorporating memory means (21, 22).

9. A device as claimed in any one of the preceding claims, characterised in that said actuator means (19) essentially comprises an electric motor (27).

10. A device as claimed in Claim 9, characterised in that said electric motor (27) is of stepping type.

## Revendications

1. Dispositif mélangeur d'eau (1) comportant un appareil régulateur d'écoulement unique (2) pourvu de deux orifices d'entrée (11,12) et d'un orifice de sortie (13) lesquels sont respectivement reliés, en cours d'utilisation, à des moyens d'alimentation en eau chaude (14) et en eau froide (15) et à une canalisation (3) d'alimentation d'une pluralité d'appareils (4) de distribution de l'eau mélangée, caractérisé en ce qu'il comprend des moyens de mesure (16) pour mesurer la température de l'eau mélangée, lesquels sont disposés immédiatement en aval de l'orifice de sortie (13) de l'appareil régulateur d'écoulement unique (2), une pluralité de panneaux (17) dont chacun comprend des moyens de sélection (31,32) pour sélectionner la température de l'eau mélangée, des premiers moyens d'affichage (33) pour afficher la température sélectionnée par les moyens de sélection (31,32) et des seconds moyens d'affichage (34) pour afficher la température mesurée par les moyens de mesure (16), chacun de ces panneaux (17) étant agencé de manière à pouvoir être monté en association avec un appareil de distribution d'eau respectif (4), des moyens de traitement central (18) connectés aux moyens de mesure (16) et à chacun des panneaux (17), des moyens d'actionnement (19) de l'appareil régulateur d'écoulement unique (2) lesquels sont commandés par les moyens de traitement central (18) de telle manière qu'en cours d'utilisation la température mesurée de l'eau mélangée soit amenée à être proche de la température sélectionnée, et des moyens d'alarme destinés à être installés dans au moins un appareil de distribution d'eau prédéterminé (4), ces moyens d'alarme étant automatiquement mis en service par les moyens de traitement central (18) lorsque la température mesurée de l'eau mélangée dépasse une valeur prédéterminée.

2. Dispositif suivant la revendication 1 caractérisé en ce que les moyens de mesure (16) comprennent un transducteur thermoélectrique.

3. Dispositif suivant l'une quelconque des revendications 1 ou 2 caractérisé en ce que les moyens de sélection (31,32) comprennent des moyens interrupteurs.

4. Dispositif suivant la revendication 3 caractérisé en ce que les moyens interrupteurs sont constitués essentiellement d'un premier bouton-poussoir (31) et d'un second bouton-poussoir (32).

5. Dispositif suivant la revendication 4 caractérisé en ce que des signes ( +,-) sont reproduits respectivement sur les premier et second boutons-poussoirs (31,32).

6. Dispositif suivant l'une quelconque des revendications précédentes caractérisé en ce que les premiers et seconds moyens d'affichage (33,34) comprennent une pluralité d'éléments émetteurs de lumière (35) disposés de manière à être alignés les uns avec les autres et/ou une pluralité d'éléments indicateurs (37) du type à cristaux liquides.

7. Dispositif suivant l'une quelconque des revendications précédentes caractérisé en ce que les moyens d'alarme sont du type optique et/ou acoustique.

8. Dispositif suivant l'une quelconque des revendications précédentes caractérisé en ce que les moyens de traitement central (18) comprennent un microprocesseur (20) comportant des mémoires (21,22).

9. Dispositif suivant l'une quelconque des revendications précédentes caractérisé en ce que les moyens d'actionnement (19) sont constitués essentiellement par un moteur électrique (27).

10. Dispositif suivant la revendication 9 caractérisé en ce que le moteur électrique (27) est du type pas-à-pas.

## Patentansprüche

1. Wasser-Mischvorrichtung (1) mit einem einzigen Strömungsregelglied (2) enthaltend zwei Einlässe (11,12) und einen Auslass (13), die im Betrieb an Heisswasser- (14) bzw. Kaltwasser-Zufuhrmittel (15) bzw. an ein Rohr (3) zum Speisen mehrerer Mischwasser-Auslaufeinheiten (4) angeschlossen sind, dadurch gekennzeichnet, dass die Vorrichtung umfasst:
ein unmittelbar stromabwärts des Auslasses (13) des einzigen Strömungsregelgliedes (2) angeordnetes Messelement (16) zum Messen der Mischwassertemperatur;
mehrere Tafeln (l7), die je Wählelemente (31,32) zum Wählen der Mischwassertemperatur, ein erstes Anzeigeelement (33) zum Anzeigen der durch die Wählelemente (31,32) gewählten Temperatur und ein zweites Anzeigeelement (34) zum Anzeigen der durch das Messelement (16) gemessenen Temperatur umfassen, wobei jede Tafel (17) zum Montieren entsprechend einer der betreffenden Auslaufeinheiten (4) ausgebildet ist;
einen Zentralrechner (18), der mit dem Messelement (16) und jeder Tafel (17) verbunden ist;
ein Betätigungselement (19) des einzigen Strömungsregelgliedes (2), das durch den Zentralrechner (18) derart gesteuert ist, dass im Betrieb die gemessene Mischwassertemperatur in die Nähe der gewählten Temperatur geführt wird; und ein Warnelement zur Montage bei mindestens einer der vorbestimmten Auslaufeinheit (4), wobei das Warnelement automatisch durch den Zentralrechner aktiviert wird, wenn die gemessene Mischwassertemperatur einen vorbestimmten Wert übersteigt.

2. Vorrichtung nach Anspruch 1, dadurch gekennzeichnet, dass das Messelement (16) einen thermoelektrischen Wandler umfasst.

3. Vorrichtung nach Anspruch 1 oder 2, dadurch gekennzeichnet, dass die Wählelemente (31,32) Schaltmittel umfassen.

4. Vorrichtung nach Anspruch 3, dadurch gekennzeichnet, dass die Schaltmittel im wesentlichen aus einem ersten Druckknopf (31) und einem zweiten Druckknopf (32) bestehen.

5. Vorrichtung nach Anspruch 4, dadurch gekennzeichnet, dass Zeichen ( +,-) auf den ersten und zweiten Druckknöpfen (31,32) aufgebracht sind.

6. Vorrichtung nach einem der vorangehenden Ansprüche, dadurch gekennzeichnet, dass die ersten und zweiten Anzeigeelemente (33,34) mehrere lichtemittierende Elemente (35) umfassen, die aufeinander ausgerichtet sind, und/oder mehrere Indikatorelemente (37) des Flüssigkristall-Typs.

7. Vorrichtung nach einem der vorangehenden Ansprüche, dadurch gekennzeichnet, dass das Warnelement vom optischen und/oder akustischen Typ ist.

8. Vorrichtung nach einem der vorangehenden Ansprüche, dadurch gekennzeichnet, dass der Zentralrechner (18) einen Mikroprozessor (20) enthaltend einen Speicher (21,22) umfasst.

9. Vorrichtung nach einem der vorangehenden Ansprüche, dadurch gekennzeichnet, dass das Betätigungselement (19) im wesentlichen einen Elektromotor (27) umfasst.

10. Vorrichtung nach Anspruch 9, dadurch gekennzeichnet, dass der Elektromotor (27) ein Schrittmotor ist.

Fig.1

EP 0 227 916 B1

Fig.2